Europäisches Patentamt

European Patent Office

Office européen des brevets

(11) Publication number: **0 277 739**
A1

## (12) EUROPEAN PATENT APPLICATION

(21) Application number: 88300563.9

(22) Date of filing: 25.01.88

(51) Int. Cl.⁴: **E01H 12/00** , A01B 43/00

(30) Priority: 28.01.87 GB 8701925

(43) Date of publication of application:
10.08.88 Bulletin 88/32

(84) Designated Contracting States:
DE ES FR GB GR IT NL SE

(71) Applicant: ALLEN FOX MACHINERY LTD.
67 Haggerston Crescent Etal Park Estate
Westerhope Newcastle upon Tyne NE5
4TW(GB)

(72) Inventor: Fox, Francis Allen
67 Haggerston Crescent Etal Park Estate
Westerhope Newcastle upon Tyne NE5
4TW(GB)

(74) Representative: Virr, Dennis Austin et al
Urquhart-Dykes & Lord Floor B Milburn
House Dean Street
Newcastle upon Tyne NE1 1LE(GB)

(54) **Beach cleaning machine.**

(57) A machine, suitable for the removal of rubbish from beaches, comprises a chassis (1) mounted for movement along a beach surface, a digger blade (8) mounted across the chassis and able to project downwardly into the sand to lift a layer of the sand, a fixed sieve member (9) upwardly and rearwardly inclined as a direct continuation of the surface of the digger blade (8), a first conveyor (10) mounted over the sieve member (9) and having a number of projections (11) to move sand and/or rubbish over the sieve surface, a second conveyor (16) having an apertured surface and mounted to receive material from the rear of the sieve member (9) and transport it rearwardly, and receiver means, for example a hopper (18), to receive material from the rearward end of the second conveyor (16).

## BEACH CLEANING MACHINE

The present invention is a machine devised primarily for the removal of rubbish from beaches but also suitable for certain other tasks such as removing stones from fields.

The removal of litter from beaches, especially from a popular beach during or between holiday seasons, is essential if the beach is to remain attractive to its users and is also very important from the safety standpoint. Broken bottles and cans are among the hazards and the litter may also contain newspapers, plastic cups and assorted debris of various materials and sizes.

While in recent years, machines have been offered for the purpose of clearing waste matter from beaches, such machines have not been wholly satisfactory in dealing with the diverse items which are encountered. For example, one form of beach cleaning machine relies upon raking the sand surface with sprung tines. However, such tines may tend to throw aside very light waste such as plastic cups and may be ineffective against stones or other large objects. Thus many local authorities continue to rely upon manual methods for removing rubbish from beaches in their care.

Since manual methods of beach cleaning are expensive and often unsatisfactory and prior proposed machines have limitations as to the type of rubbish they can satisfactorily handle, there is a need for an improved machine which is reliable in operation on a wide variety of types of rubbish. Environmental pressures and modern legislation combine to make that need more urgent.

It is an object of the present invention to provide such an improved machine.

The beach cleaning machine according to the present invention comprises a chassis mounted for movement along a beach surface, a digger blade mounted upon said chassis transverse to the direction of movement thereof so as to be capable of projecting downwardly into the sand and thereby to lift a layer of said sand when the chassis is moved over said surface, a fixed sieve member extending upwardly and rearwardly from the rearward edge of the digger blade as a direct continuation of the blade surface, a first conveyor mounted above and generally parallel to the surface of the fixed sieve member with a plurality of projections extending from said conveyor towards said sleeve surface whereby to advance sand and/or rubbish over said sieve surface, a second conveyor having an apertured surface and mounted to receive material from the rearward end of said fixed sleeve member and to transport such material rearwardly of the machine, and receiver means located to receive material from the rearward end of said second conveyor.

It will be readily understood that the machine according to the present invention functions by lifting a complete surface layer of sand from a beach, together with any waste material lying on the beach, and then in two successive operations separates the waste material from the sand, continuously returning the sand to the beach and depositing the waste towards the rear of the machine.

The chassis of the machine is preferably in the form of an open framework designed to support the above-mentioned components of the machine during movement over the beach. The machine may be self-propelled but in a much preferred form the chassis is provided with a single pair of wheels or tracks and with a tow-bar or other means of connection to a towing vehicle such as a tractor.

The digger blade extends across the width of the machine and is preferably mounted for easy detaching and replacing, for example by means of bolts securing it to the chassis. It is highly desirable that some means be provided for varying the level of the blade relative to the beach surface, both so as to vary the depth of penetration of the blade into the sand or to take account of the natural unevenness of the beach surface on the one hand, and to lift the blade well away from the beach surface for transportation of the machine on the other. When the machine is wheel-mounted, these ends can be readily attained by pivotting the machine relative to the wheel axle(s). For example, such pivotting may be effected by changing the angle of connection of a tow-bar to the chassis.

Immediately behind the digger blade is mounted the fixed sieve member, extending as a direct continuation of the blade surface in an upward and rearward direction. The angle of upward inclination of the fixed sieve member may be exactly the same as that of the digger blade surface or it may be slightly different, and indeed provision may be made for varying the inclination of either of these components. However it is preferred that the blade surface and that of the sieve member be in close alignment, for example both at an inclination of the order of 40 degrees to the horizontal when the machine is in operation.

Preferably the sieve member comprises a plurality of parallel rods or bars running fore-and-aft of the machine. It has been found that a sieve member of this type combines the characteristics of quick separation of a large part of the lifted sand from the associated waste material with a reduced tendency to jamming as compared with other sieve members. The relative spacing of the rods or bars is determined by the minimum size of rubbish which it is desired to remove from the sand. Alternatively but less desirably, the sieve member may be a screen or mesh.

Preferably the length of the digger blade in the direction of movement of the machine is short compared with the length of the sieve member so that sand may be returned as quickly as possible to the beach. Because sand picked up and carried by the machine represents an undesirable load, this facility for quick separation and return of the sand is a highly advantageous feature of the machine.

Mounted above the fixed sieve member is the first conveyor. A part of the track of the conveyor runs generally parallel to the fixed sieve member. A plurality of projections extends from the conveyor and the conveyor is preferably so spaced from the sieve member that, where the two components are parallel to each other, the projections pass close to the sieve surface. In this way, material running off the rearward edge of the digger bladder on to the sieve tends to be moved rearwardly over the sieve surface. During that movement, free sand falls through the sieve member back on to the beach surface and larger pieces of waste are conveyed towards the second conveyor. Preferably the first conveyor is mounted so as to be capable of lifting or swinging away from the sieve member so that the mechanism does not become jammed if unduly large stones or other debris enter the pinch at the leading edges of the conveyor and sieve member. In addition or alternatively, the drive to the first conveyor may be reversible so that jams which do occur can be unlocked.

The projections from the conveyor may be spaced apart across the width of the conveyor as well as down its length. Thus they may be in the form of fingers or teeth. Projections in succeeding rows may be mutually aligned or staggered.

Adjacent to the rear of the sieve member is mounted the second conveyor. This conveyor has an apertured surface in order that the separating of the waste material from residual sand may continue, and indeed be completed, while the material is moved on its surface. The leading end of the second conveyor may advantageously be located below the rearward end of the sieve member. The second conveyor is preferably upwardly inclined to the horizontal when the machine is operating. For example, the second conveyor may extend upwardly and rearwardly in a plane inclined at an angle approximately equal to the angle of inclination of the fixed sieve member.

Mounted to receive material from the rearward end of the second conveyor is a receiver means. This receiver means may be a further conveyor or chute, for example directed transversely with respect to the second conveyor, whereby to convey the separated material to a truck moving along the sand adjacent to the beach cleaning machine. However, in a preferred form of the invention, the receiver means is a container mounted upon the machine chassis. The container is preferably hopper-shaped, that is tapering downwardly from its open end, and is preferably mounted in a manner which assists the removal of waste material from the machine. To this end, it is preferred that means be provided to tip the container into a position in which its contents are readily discharged or dischargeable. Alternatively, the container may be mounted for easy interchange of a full container with an empty one.

Power for driving the moving parts of the beach cleaning machine according to the present invention may be provided on the machine itself but it is much preferred that power be taken from a towing vehicle. Thus the conveyors may conveniently be driven by hydraulic motors and the power for that purpose, and for operating rams controlling the working height of the machine and the tipping of the container means, may be provided by a tractor towing the machine, either directly or via a hydraulically driven pump.

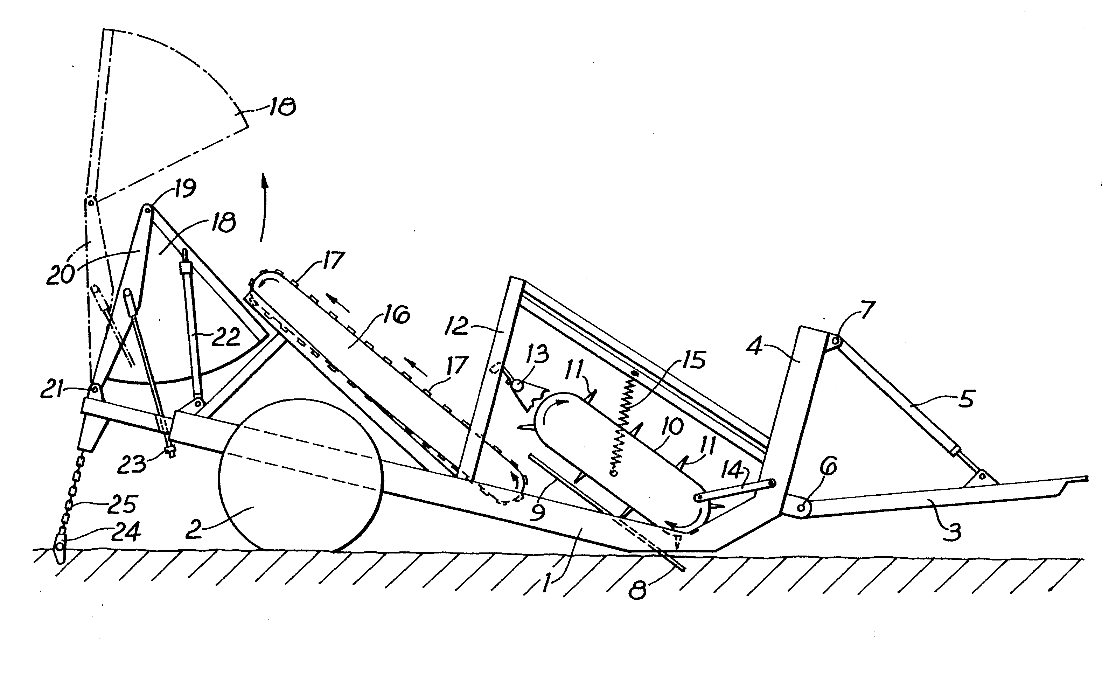

The invention will now be further described with reference to the accompanying drawing, which illustrates, in side view and somewhat schematically, one embodiment of beach cleaning machine according to the present invention.

The illustrated machine is built upon an open-frame chassis 1 provided with a single pair of tyred wheels 2 and tow-bar 3. The tow-bas is supported from an upright member 4 of the chassis 1 by means of a hydraulic ram 5, the tow-bar being pivotted on the chassis at pivots 6 and 7 respectively. Thus by operation of the ram 5, the inclination of the tow-bar 3 to the chassis 1 may be varied, such that the machine may be lifted into a generally horizontal orientation giving good ground clearance for movement between sites, or lowered into the illustrated position for beach cleaning operations.

A mild steel digger blade 8, removably secured by bolts, extends across the machine between side members of the chassis 1 and projects downwardly and forwardly from the chassis so as to engage the beach surface as illustrated. Typically, the blade 8 projects approximately 7.5 cm below the sand surface and is inclined, when in the operating position shown, at an angle of about 40 degrees to the horizontal. The blade 8 in the illustrated embodiment may be between 15 and 20 cm long in the direction of the length of the machine.

Extending rearwardly and upwardly from the rearward edge of the digger blade 8, at the same inclination as the blade, is a fixed sieve member 9, formed of parallel steel bars, each about 0.5 cm wide and spaced apart at approximately 4 cm intervals; the bars run fore-and-aft with respect to the length of the machine.

Disposed above the digger blade 8 and sieve member 9 is a continuous conveyor 10, carrying teeth 11 projecting outwardly from the conveyor surface. The conveyor 10 is supported within a frame which in turn is suspended in a manner shown schematically so as to be capable of limited movement towards and away from the sieve member 9. As its rearward end, the conveyor frame is supported on a chassis member 12 via a rubber bush 13. A pivotted bracket 14 allows the conveyor frame to swing at its forward end away from the sieve member 9. At rest, the conveyor is further supported by tension springs 15.

In the normal operating position of the conveyor 10, the teeth 11 project almost into contact with the surface of the sieve member 9. Thus, when the conveyor is rotated in the direction of the arrows, material lifted from the beach by the digger blade 8 (that is, a surface layer of sand and associated waste material) is conveyed upwardly over the sieve surface by the teeth 11. A large proportion of the sand itself immediately falls back on to the beach through the sieve member 9.

Also mounted upon the chassis 1 is a second conveyor 16. This conveyor is disposed at a similar upward angle to the sieve member 9, with its forward (lower) end located below the rearward edge of the sieve member. The conveyor 16 is formed of a spiral-wire mesh and has a number of cross-bars 17 disposed laterally across its surface. Waste material from the beach, largely separated from the sand lifted with it, is more completely separated from residual sand during its passage over the conveyor 16.

From the upper end of the conveyor 16, the waste material drops into a receiver in the form of a hopper 18. The hopper is pivotally suspended at 19 from a pair of support arms 20, in turn pivotted to the chassis at 21. Tipping of the hopper 18 is effected by a pair of hydraulic rams 22. When the rams 22 are operated, the arms 20 pivot about the pivot point 21 through a small angle until further pivotting is prevented by a mechanical stop 23. At this point, the hopper has moved from beneath the upper end of the conveyor 16. Further operation of the rams 22 swings the hopper 18 about the pivot 19 into the tipping position shown chain-dotted in the drawing.

The conveyors 10 and 16 are driven by hydraulic motors, powered in turn by a hydraulic pump driven by hydraulic power taken from a tractor towing the machine. Similarly, the rams 5 and 22 are operated from the tractor hydraulics. The machine is partially enclosed by side panels, not shown in the drawing.

The sand surface is restored to an even appearance by means of a rake 24, suspended by chains 25 at the rear of the machine.

In experimental operation, the form of the machine illustrated has produced excellent results in removing stones, seaweed, plastic cups and other widely assorted debris in a continuous manner from a badly-littered beach, leaving an attractively clean sand surface in its wake.

## Claims

1. A beach cleaning machine, characterised in that is comprises a chassis (1) mounted for movement along a beach surface, a digger blade (8) mounted upon said chassis transverse to the direction of movement thereof so as to be capable of projecting downwardly into the sand and thereby to lift a layer of said sand when the chassis is moved over said surface, a fixed sieve member (9) extending upwardly and rearwardly from the rearward edge of the digger blade (8) as a direct continuation of the blade surface, a first conveyor (10) mounted above and generally parallel to the surface of the fixed sieve member (9) with a plurality of projections (11) extending from said conveyor towards said sieve surface whereby to advance sand and/or rubbish over said sieve surface, a second conveyor (16) having an apertured surface and mounted to receive material from the rearward end of said fixed sieve member and to transport such material rearwardly of the machine, and receiver means (18) located to receive material from the rearward end of said second conveyor (16).

2. A beach cleaning machine according to claim 1, characterised by means (5) to vary the level of the blade relative to the beach surface.

3. A beach cleaning machine according to claim 2, characterised in that said chassis (1) is provided with a single pair of wheels (2) or tracks and with a tow-bar (3) and that said varying of the level of the blade is effected by varying the angle of connection of the tow-bar (3) to the chassis (1).

4. A beach cleaning machine according to any of the preceding claims, characterised in that the angle of upward inclination of the fixed sieve member (9) is at least approximately equal to that of the surface of the digger blade (8).

5. A beach cleaning machine according to claim 4, characterized in that the angles of upward inclination of the fixed sieve member (9) and of the digger blade (8) are of the order of 40 degrees to the horizontal when the machine is in operation.

6. A beach cleaning machine according to any of the preceding claims, characterised in that the fixed sieve member (9) comprises a plurality of parallel rods or bars running fore-and-aft of the machine.

7. A beach cleaning machine according to any of the preceding claims, characterised in that the length of said digger blade (8) in the direction of movement of the machine is short compared with the length of said fixed sieve member (9) in said direction.

8. A beach cleaning machine according to any of the preceding claims, characterised in that said first conveyor (10) is mounted so as to be capable of lifting or swinging away from said fixed sieve member (9).

9. A beach cleaning machine according to any of the preceding claims, characterised in that said projections (11) from said first conveyor (10) are spaced apart across the width and down the length of said first conveyor.

10. A beach cleaning machine according to any of the preceding claims, characterised in that the leading end of said second conveyor (16) is located below the rearward end of the fixed sieve member (9).

11. A beach cleaning machine according to any of the preceding claims, characterised in that said second conveyor (16) is inclined in an upward and rearward direction.

12. A beach cleaning machine according to any of the preceding claims, characterised in that the receiver means is a container (18) mounted upon said chassis.

13. A beach cleaning machine according to claim 12, characterised by means (22) to tip said container (18) to enable discharge of its contents.

0 277 739

European Patent
Office

EUROPEAN SEARCH REPORT

Application Number

EP 88 30 0563

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | GB-A-2 027 097 (NICKERSON)<br>* Whole document * | 1,2,4,5,6,7,10,12,13 | E 01 H 12/00<br>A 01 B 43/00 |
| Y | GB-A-2 118 412 (A.W. SQUIER LTD)<br>* Whole document * | 1,2,4,5,6,7,10,12,13 | |
| A | FR-A-2 331 643 (DOPPSTADT)<br>* Page 3, line 14 - page 4, last line; figures * | 1-7 | |
| A | US-A-4 313 502 (NELSON)<br>* Column 4, line 47 - column 6, line 11; figures * | 1,2,4,6,7,8 | |
| A | FR-A-2 562 577 (JAMBON)<br>* Whole document * | 1,9,11 | |

TECHNICAL FIELDS
SEARCHED (Int. Cl.4)

E 01 H
A 01 B

The present search report has been drawn up for all claims

| Place of search | Date of completion of the search | Examiner |
|---|---|---|
| THE HAGUE | 29-04-1988 | DIJKSTRA G. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)